# EUROPÄISCHE PATENTSCHRIFT

(11) **EP 1 565 054 B1**
(45) Veröffentlichungstag und Bekanntmachung des Hinweises auf die Patenterteilung: **15.11.2006**
(21) Anmeldenummer: 03811703.2
(22) Anmeldetag: 17.11.2003
(51) Int. Cl.: A01K 13/00, A01L 3/00

(54) **GRÖSSENVERSTELLBARER SCHUH FÜR HUFTIERE**
SIZE-ADJUSTABLE SHOE FOR HOOFED ANIMALS
CHAUSSURE A GRANDEUR REGLABLE POUR ONGULES

(30) Priorität: 27.11.2002 CH 200302
(43) Veröffentlichungstag der Anmeldung: 24.08.2005
(73) Patentinhaber: Maestrini, Manolo, 8335 Hittnau (CH)
(72) Erfinder: Maestrini, Manolo, 8335 Hittnau (CH)
(74) Vertreter: Schneider Feldmann AG Patent- und Markenanwälte
(86) Internationale Anmeldenummer: PCT/CH2003/000752
(87) Internationale Veröffentlichungsnummer: WO 2004/047526

(56) Entgegenhaltungen:
- WO-A-00/16614
- US-A- 3 732 929
- US-A- 3 794 119
- US-A- 4 736 800
- US-A- 5 224 549
- US-B1- 6 305 328

## Beschreibung

Die Erfindung betrifft einen grössenverstellbaren Schuh für Huftiere.

Viele Arten von Huftieren sind seit langem domestiziert und werden als Nutztiere oder für sportliche Zwecke eingesetzt. Solche Huftiere umfassen unter anderem alle Rassen von Pferden, Ponys, Eseln, Maultieren und Mauleseln. Ursprünglich bewegten sich diese Tiere auf natürlichem Boden, wodurch sich die Hufe mehr oder weniger gleichsam abnützten wie sie nachwuchsen. Die Hufe von domestizierten Huftieren sind allerdings grösseren Abnutzungen unterworfen auf dem oftmals befestigten Boden, auf dem sie zudem noch Lasten tragen.

Um diese Abnutzung der Hufe zu verhindern, werden Huftiere seit langem mit Hufeisen beschlagen. Ein dafür ausgebildeter Hufschmied oder Hufpfleger passt dazu Hufeisen geeigneter Grösse an die Hufe an und befestigt diese mit Hufnägeln. Nach sechs bis acht Wochen werden die Hufeisen ersetzt, einerseits, weil sie sich abgenutzt haben, andererseits, weil die Hufe zwischenzeitlich gewachsen sind und geschnitten werden müssen.

Hufeisen haben verschiedene Nachteile. Je nach Bodenbeschaffenheit sind sie sehr rutschig. Bei kaltem Wetter ist die grosse Haftung von Schnee und Eis an dem metallischen Hufeisen ein Problem. Im Winter sorgen Stollen an die Hufeisen für bessere Bodenhaftung.

Aus diesem Grund wurden, vorwiegend für Pferde und pferdeähnliche Tiere, Hufschuhe entwickelt. Diese werden von den Hufschmieden oder Hufpflegern an die einzelnen Hufe angepasst. Solche Schuhe werden vor dem Ausritt an die Hufe angebracht und danach wieder ausgezogen. Sie bestehen mehrheitlich aus Kunststoff, Textilien oder/und Leder und weisen auf der Sohle ein hufeisenähnliches Profil auf, um dem Tier gute Bodenhaftung zu gewährleisten. Obwohl die Schuhe in verschiedenen Grössen hergestellt werden, muss der Hufpfleger jeden Schuh bezüglich Breite, Länge und Steilheit mit Hilfe eines Heissluftföhns anpassen. Nach etwa sechs Monaten sind die Sohlen abgelaufen und die Schuhe müssen ersetzt werden.

In der US 4744422 wird ein Hufschuh vorgestellt, der auf der Unterseite offen ist und dort die Form eines Hufeisens aufweist. Eine aufwändige Verschnallung mit gepolstertem Ballenteil sorgt für Halt. Der Sitz muss allerdings regelmässig überprüft werden, da sonst eine Verletzungsgefahr droht.

Die EP 0212445 beschreibt eine Hufbekleidung, bei der die Befestigung im Bereich der Fesseln vorgenommen wird und nicht wie sonst üblich im Bereich des Hufes. Nach langem Lauf bilden sich Scheuerstellen.

Die CH 680181 beschreibt eine weitere Fussbekleidung für Huftiere mit einem hinteren Befestigungsriemen in der Art eines Fersenbandes, das zu Scheuerstellen führen kann. Zum Anziehen wird ein Hammer verwendet, zum Ausziehen soll der Hufkratzer zu Hilfe geholt werden.

In den US 3732929 und US 5661958 werden Hufschuhe mit einer Skischuhschnalle zum Spannen eines Bandes auf der vorderen Kappe vorgestellt, der über ein anpassbares Fersenband verfügt. Auch dieser ist wegen der kompakten Form mit Hilfe eines Hammers anzuziehen und später nur schwer entfernbar.

Die US 5715661 beschreibt einen Hufschuh mit einem faltartigen Fersenteil um einen einfacheren Einstieg zu ermöglichen. Ein Nylonband am oberen Rand gewährt Halt. Durch sein geschlossener Schnitt lässt er sich vor allem als Gesundheitsschuh anwenden. Andererseits lässt er sich kaum an unterschiedliche Hufformen anpassen.

In der WO 0016614 wird ein mehrschichtiger Schuh für Huftiere vorgestellt. Eine aufwändige Montagetechnik liefert zwar einen guten Halt, doch ein Montageband verläuft über das Fell des Tieres und kann somit bei leichten Drehbewegungen beim Laufen zu Scheuerstellen führen. Auch muss der Huf bezüglich drei Massen ausgemessen werden, um die entsprechende Grösse des Schuhs zu bestimmen. Die aus Leder im Handel erhältliche Ausführung lässt sich sehr schwer reinigen.

In der EP 1008295 wird ein Schuh für Huftiere vorgestellt, bei dem ein inneres Element unter Druck verformbar ist. Ein grosser Druck auf den Ballen kann für das Pferd allerdings sehr schmerzhaft sein. Die Druckeinstellung ist daher kritisch. Der vordere Teil des Schuhs lässt sich aufklappen.

Alle diese hier beschriebenen Modelle haben unterschiedliche Schwachstellen, die bereits erläutert wurden.

Ein allgemeines Problem ist die Grösse der Schuhe und deren recht aufwändige Anpassung. Je mehr unterschiedliche Grössen angefertigt werden, desto leichter fällt die Anpassung, doch um so teurer kommt die Herstellung und umso grösser muss das Lager des Händlers sein, um immer das passende Modell anbieten zu können. Zudem muss berücksichtigt werden, dass die Hufe kontinuierlich wachsen und bald kaum mehr in den gut angepassten Schuh passen.

Auf Grund der hier beschriebenen Probleme der bekannten Schuhe für Huftiere stellt sich die Aufgabe der vorliegenden Erfindung, einen Schuh für Huftiere zu beschreiben, der bequem an- und ausziehbar ist, einen guten Halt gewährleistet, sich einfach reinigen lässt, keine Scheuerstellen am Tier verursacht, preiswert und einfach aufgebaut ist und in der Grösse mindestens teilweise verstellbar ist.

Die Aufgabe wird gelöst durch die Merkmale des Anspruchs 1.

Die Erfindung wird im Folgenden unter Beihilfe der Zeichnungen beschrieben. Es zeigen
- Fig. 1: ein schematisches Abbild eines erfindungsgemässen Modells eines Hufschuhs für Huftiere
- Fig. 2: zwei verschiedene perspektivische Abbildungen und eine Rückansicht eines Schutzteiles
- Fig. 3: eine perspektivische Abbildungen eines Fixierteiles
- Fig. 4: die Bodenansicht einer möglichen Ausgestaltung eines Profils

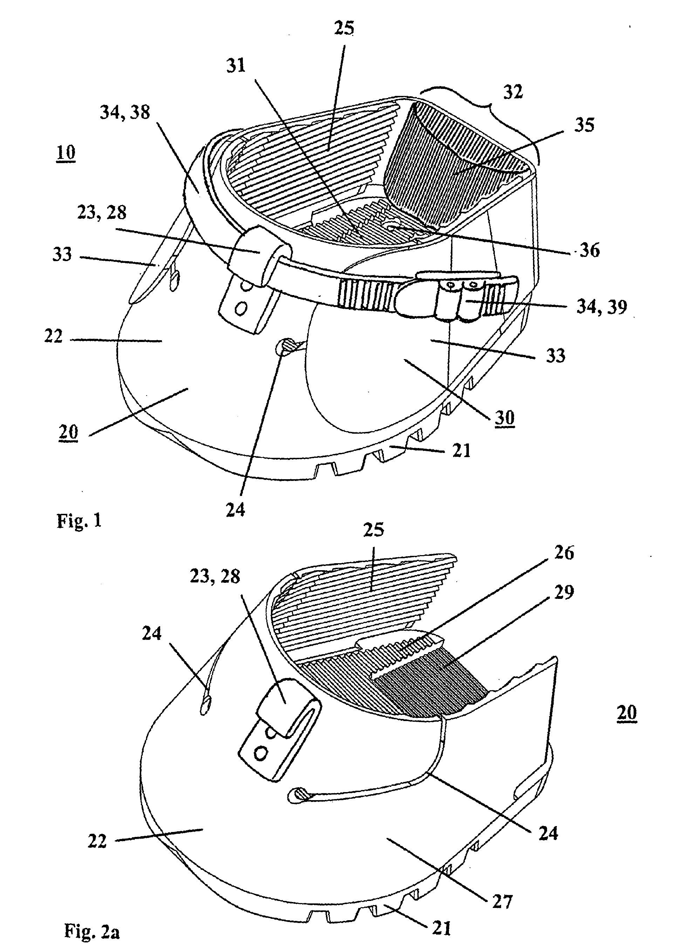

Die Figur 1 zeigt ein Beispiel eines fertig geschlossenen Hufschuhs 10, wie er im eingesetzten Zustand verwendet wird. In dieser Anordnung gleicht er einem Schuh des Standes der Technik.

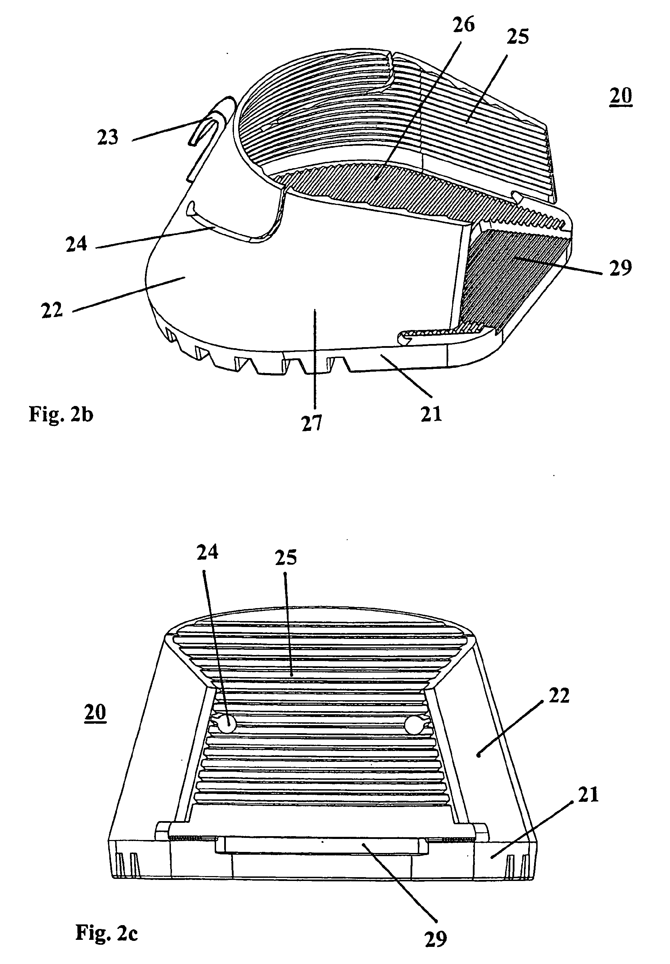

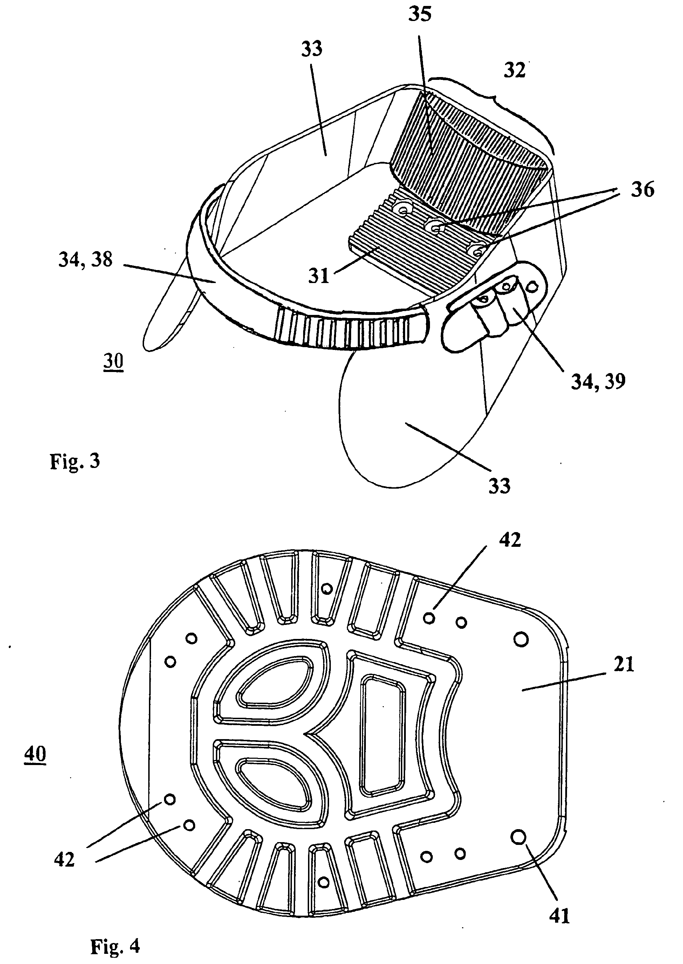

In den Figuren 2 und 3 ist ersichtlich, dass der Hufschuh 10 aus mindestens zwei vollkommen voneinander lösbaren Teilen besteht, namentlich einem Schutzteil 20 der Fig. 2 und einem Fixierteil 30 der Fig. 3. Diese Teile ergeben, passend ineinandergelegt, eine Ausführung 10 gemäss Fig. 1.

Das Schutzteil 20, bestehend im wesentlichen aus einer Sohle 21, einer Kappe 22 und einer Befestigungsvorrichtung 23, stellt das Verschleissteil dar, das nach Abnützung ersetzt werden muss. Das Fixierteil 30, das aus einer Einlage 31, einem Fersenteil 32, zwei Seitenlaschen 33 und einem Befestigungsvorrichtung 34 besteht, wird dem Huf in der Länge individuell angepasst und kann an jedes weitere, ersetzte Schutzteil 20 angebracht werden. Demnach muss jeweils nach Abnützung des Hufschuhs 10 erstens nur der Schutzteil 20 ersetzt werden und zweitens muss keine neue Längenanpassung vorgenommen werden. Dies senkt einerseits die Verbrauchskosten und andererseits die Kosten und Umtriebe des Anpassens.

Die Sohle 21 des Schutzteils 20 in Fig. 2 kann auf der Unterseite verschiedene Profile aufweisen, die je nach Bodenbeschaffenheit, Jahreszeit und Reitstil ausgesucht werden können. Eine Möglichkeit eines bevorzugten Profils 40 ist in Fig. 4 abgebildet. Speziell können beispielsweise Gewinde 41 angebracht sein zum Anbringen von Stollen oder/und Vorrichtungen 42 vorgesehen sein zum Anbringen von Metallstiften wie Spikes. Vorzugsweise werden sogenannte Spikes während dem Herstellungsprozess in die Sohle eingegossen. Um den Abrieb minimal zu halten, ist die Sohle 21 vorzugsweise aus einem festen Material, vorzugsweise aus einem harten Kunststoff, beispielsweise Polyurethan PU mit einer Abriebfestigkeit von einer Shore-Härte von 80-100 A. Sohlen können nach Bedarf für individuelle Einsatzbereiche gefertigt werden, beispielsweise für Sommer- (ohne Spikes) oder Winterbedarf oder zum Springen.

Die Kappe 22 kann, ähnlich wie bei den herkömmlichen Schuhen für Huftiere, aus einem weicheren Material als die Sohle, beispielsweise ebenfalls aus Kunststoff, beispielsweise aus PU bestehen. Die Wandstärke der Kappe 22 ist allerdings geringer als die der Sohle 21 und liegt etwa zwischen 1 und 6 mm, vorzugsweise zwischen 3 und 5 mm. Vorzugsweise verfügt die Kappe 22 über einen oder mehrere verschiedene, gerade oder geformt ausgestaltete Einschnitte 24 mit oder ohne Aussparungen, die eine angepasste Form der Kappe 22 an verschieden steile Hufformen zulassen. Die Befestigungsvorrichtung 23 an der Kappe 22 soll so ausgestaltet sein, dass sie zusammen mit der Befestigungsvorrichtung 34 des Fixierteils 30 eine gute Fixierung dieser beiden Teile 20, 30 ermöglicht.

Die Kappe 22 soll einen guten Halt vom Huf an die Sohle 21 gewährleisten. Der seitliche Teil der Kappe 22 ist der sogenannte Stabilisator 27. Der Stabilisator 27 sorgt dafür, dass der Huf nicht von der Sohle 21 abrutschen kann und sorgt auch für eine gute Stabilisierung des Hufs im Hufschuh 10.

Um die Haftung von der Kappe 22 zum Huf zu verbessern, kann auf der Innenseite der Kappe 22, speziell vorne und an beiden Seiten, mindestens partiell eine Struktur 25 ausgestaltet oder angebracht sein, beispielsweise in Form einer Gummierung. Diese Struktur 25 hat beispielsweise die Form von Rillen oder Noppen. Ein weiterer Vorteil dieses Struktur 25 ist, dass sie die Luftzirkulation um den Huf fördert.

Auf der Innenseite der Sohle 21 kann ebenfalls mindestens teilweise für die Förderung der Luftzirkulation eine Struktur 26, beispielsweise in Form von Rillen, Zacken oder Noppen, ausgestaltet oder angebracht sein. Eine solche Struktur verhindert ein Rutschen oder ein Drehen des Hufs im Hufschuf.

Das Schutzteil 20 ist nach hinten offen, sodass längere Hufe hinten nicht anstehen.

Das Fersenteil 32 ist wiederum aus einem festen Material, vorzugsweise aus einem festen Kunststoff von zwischen 3 und 7 mm Wandstärke. An seiner dem Huf zugewandten Innenseite kann ein Polster 35 angebracht sein aus einem weichen Material, beispielsweise aus einem geschäumten Kunststoff oder einem Neopren, um einen bequemen und festen Halt zum hinteren Teil des Hufes, dem Ballenteil, zu gewährleisten und Verletzungen zu vermeiden. Die Seitenlaschen 33 sind wiederum aus einem ähnlichen Material wie die Kappe 22 und lassen sich im angezogenen Zustand flächig um die Kappe 22 legen. Die Befestigungsvorrichtung 34 ist so ausgestaltet, dass sie die beiden Seitenlaschen mit der Befestigungsvorrichtung 23 an der Kappe 22 verbindet und dadurch einen satten Halt um dem Huf gewährleistet.

Die Einlage 31 ist am unteren Rand des Fersenteils 32 vorzugsweise gelenkig verbunden und besteht aus einem biegsamen, festen Material, beispielsweise aus PU oder aus einer Gummimatte oder einem äquivalenten Material von zwischen 1 und 7 mm, vorzugsweise zwischen 3 und 5 mm Dicke. Die Einlage 32 kann vorzugsweise zusammen mit den Fersenteil 32 in einem Stück aus demselben Material gegossen sein.

Zum Zusammensetzen des Fixierteils 30 und des Schutzteils 20 wird die Einlage 31 auf eine im Wesentlichen vorzugsweise rechteckige Aussparung 29 auf der Sohle 21 des Schutzteils 20 gebracht und auf dieser in der Länge verstellbar befestigt. Die Befestigung 36 kann mittels einer oder mehrerer, vorzugsweise mittels vier Schrauben vorgenommen werden. Die Einlage 31 ist ursprünglich reichlich lange, damit der Hufschuh 10 auch für lange Hufe eingestellt werden kann. Untersuchungen haben ergeben, dass in den meisten Fällen eine einmalige Anpassung in der Länge ausreicht.

Beim Einlegen der Einlage 31 in das Schutzteil 20 kann demnach die Länge des Hufschuhs 10 bestimmt werden, indem die Einlage 31 mehr oder weniger weit in das Schutzteil 20 eingeführt wird. Die Einlage 31 kann für kleinere Hufe in der Länge gekürzt werden, damit sie sich vollständig in die Aussparung 29 einfügen lässt.

Auf diese Weise lässt sich der Hufschuh 10 auf einfache Weise in der Länge verstellen und an den jeweiligen Huf anpassen.

Die Verschraubung 36 kann direkt durch die Einlage 31 in die Sohle 21 im Bereich der Aussparung 29 erfolgen. Die Aussparung 29 kann mit einer festen Platte, beispielsweise mit einer Metallplatte versehen sein. Eine solche Platte, beispielsweise aus einem harten Aluminium, kann beim Herstellungsprozess eingegossen werden. Dadurch greifen die Schrauben besser und die Stabilität der Verbindung zwischen Schutzteil 10 und Fixierteil 20 ist verbessert. Alternativ dazu oder zusätzlich können Gewinde, beispielsweise Metallgewinde, in der Sohle eingebracht sein.

Die Einlage 31 verfügt vorzugsweise auf deren Unterseite über eine Struktur (nicht dargestellt in den Zeichnungen), die zusammen mit einer entsprechenden Struktur auf der Oberseite der Aussparung 29 im wesentlichen keine Verschiebung zulässt.

Durch die flexible Verbindung der Einlage 31 zum Fersenteil 32 und durch die Einschnitte 24 mit oder ohne Aussparungen in der Kappe 22 lässt sich der Hufschuh 10 leicht öffnen, womit ein einfacher Einstieg des Hufs in den Hufschuh 10 gewährleistet ist. Die Kappe 22 passt sich, dank den Einschnitten 24, der Hufform in der Steilheit an. Unter Verwendung der Befestigungsvorrichtungen 23, 34 lässt sich nun der Schuh einfach und fest verschliessen. Der Ausstieg verläuft in umgekehrten Schritten und ist ebenso einfach wie der Einstieg.

In der in den Figuren 1 und 2 dargestellten Ausführung besteht die Befestigungsvorrichtung 23, 34 im Wesentlichen aus einem Riemen 38, der, ähnlich wie bei Skischuhen, Snowboardschuhen, Rollschuhen oder Inlineskates, mit einer Schnalle 39, beispielsweise mit Rasterverschluss zum einfachen Nachspannen, verbunden werden kann. Ösen, Schlaufen oder Haken 28 an der Kappe 22 gewährleisten einen Halt des Riemens 38 am Schutzteil 20.

Der Hufschuh 10 kann leicht mit Wasser und einer Bürste gereinigt werden.

Das Polster 35 verhindert, dass Steine und andere Partikel während des Laufens des Huftieres in den Hufschuh 10 gelangen können und dadurch Druckstellen, Verletzungen und Schmerzen im Ballenbereich des Huftieres verursachen.

Im hinteren Bereich des Stabilisators 27 kann zusätzlich eine feste Einlage einer gewünschten Dicke angebracht werden, wenn der Huf schmäler ist als der Schuh. Dadurch wird der Halt verbessert. Entsprechende Einlagen aus verschiedenen Dicken und mit geeigneten Befestigungsmöglichkeiten, beispielsweise mit einer Klebevorrichtung, können bei der Grössenanpassung an ein Huf verwendet werden.

Alternative in der Länge verstellbare lösbare Befestigungsmöglichkeiten zwischen Schutzteil 20 und Fixierteil 30 sind zahlreich. So lässt sich die Einlage 31 auch beispielsweise unter einen am Schutzteil 20 angebrachten Bügel einfädeln und danach am Fersenteil 32 zur Befestigung verstellbar und vorzugsweise lösbar anbringen.

Der Vorteil dieser Erfindung liegt in der Längenverstellbarkeit des Hufschuhs 10 und deren leichten Anpassung und in der guten Anpassung der Passform an die Hufform sowie im leichten Ein- und Ausstieg. Ein weiterer Vorteil liegt in der schnellen, einfachen und satten Befestigung des Hufschuhs mit einem guten Halt, dem Verhindern von Druckstellen, Verletzungen und Schmerzen durch beispielsweise in den Schuh fallende Steine und in der Auswechselbarkeit jeweils eines Teiles 20, 30 nach dessen Verschleiss.

### Liste der Bezeichnungen

- **10**: **Hufschuh**
- **20**: **Schutzteil**
- 21: Sohle
- 22: Kappe
- 23: Befestigungsvorrichtung
- 24: Einschnitte
- 25: Struktur an der Kappe
- 26: Struktur auf der Sohle
- 27: Stabilisator
- 28: Ösen oder Haken
- 29: Aussparung
- **30**: **Fixierteil**
- 31: Einlage
- 32: Fersenteil
- 33: Seitenlaschen
- 34: Befestigungsvorrichtung
- 35: Polster
- 36: Befestigung, beispielsweise mittels Schrauben
- 38: Riemen
- 39: Schnalle
- **40**: **Profil**
- 41: Gewinde
- 42: Metallstifte oder Vorrichtung dafür

## Patentansprüche

1. Hufschuh (10) für Huftiere bestehend aus mindestens einem Schutzteil (20) und einem Fixierteil (30), wobei das Schutzteil (20) mindestens eine Sohle (21), eine vorne und auf beiden Seiten verlaufende Kappe (22) und eine Befestigungsvorrichtung (23) umfasst und das Fixierteil (30) mindestens eine Einlage (31), ein Fersenteil (32), zwei Seitenlaschen (33) und eine Befestigungsvorrichtung (34) umfasst, wobei das Fersenteil (32) mit verstellbarem Abstand an der Sohle (21) angebracht werden kann, und wobei die Befestigungsvorrichtungen (23,34) einen festen Halt des Hufschuhs (10) mit dem Huf ermöglichen.

2. Hufschuh gemäss Anspruch 1, **dadurch gekennzeichnet, dass** der Fixierteil (30) vom Schutzteil (20) vollständig lösbar ist.

3. Hufschuh gemäss Anspruch 1 oder 2, **dadurch gekennzeichnet, dass** an der Innenseite des Fersenteils (32) ein Polster (35) zum Schutz des Ballens angebracht ist.

4. Hufschuh gemäss einem der Ansprüche 1 bis 3, **dadurch gekennzeichnet, dass** die Kappe (22) über einen oder mehrere Einschnitte (24) mit oder ohne Aussparungen verfügt, die derart angeordnet sind, dass sich die Kappe (22) an verschieden steile Hufe anpassen kann.

5. Hufschuh gemäss einem der Ansprüche 1 bis 4, **dadurch gekennzeichnet, dass** auf der Innenseite der Kappe (22) mindestens teilweise eine vorzugsweise zu einem Huf rutschfeste Struktur (25) ausgestaltet oder angebracht ist.

6. Hufschuh gemäss einem der Ansprüche 1 bis 5, **dadurch gekennzeichnet, dass** die Sohle (21) über ein vorzugsweise rutschfestes Profil (40) verfügt.

7. Hufschuh gemäss einem der Ansprüche 1 bis 6, **dadurch gekennzeichnet, dass** die Sohle (21) Gewinde (41) für Stollen und/oder Vorrichtungen für Metallstifte (42) aufweist.

8. Hufschuh gemäss einem der Ansprüche 1 bis 7, **dadurch gekennzeichnet, dass** die Sohle (21) Metallstifte (42) aufweist.

9. Hufschuh gemäss einem der Ansprüche 1 bis 8, **dadurch gekennzeichnet, dass** die Einlage (31) an der Unterseite sowie die Sohle (21) auf der Oberseite mindestens teilweise über zu einander rutschfeste Strukturen verfügen.

10. Hufschuh gemäss einem der Ansprüche 1 bis 9, **dadurch gekennzeichnet, dass** die Oberseite der Sohle (21) eine im Wesentlichen vorzugsweise rechteckige Aussparung (29) aufweist, in welche die Einlage (31) in verstellbarer Länge eingefügt werden kann.

11. Hufschuh gemäss einem der Ansprüche 1 bis 10, **dadurch gekennzeichnet**, die Einlage (31) mit Schrauben an der Sohle (21) verstellbar befestigt werden kann.

12. Hufschuh gemäss einem der Ansprüche 1 bis 11, **dadurch gekennzeichnet, dass** die Befestigungsvorrichtungen (23,34) Riemen (38), Schnallen (39) und Ösen, Schlaufen oder/und Haken (28) umfasst.

## Claims

1. A hoofshoe (10) for hoofed animals consisting of at least one protecting portion (20) and a fixing portion (30), wherein the protecting portion (20) comprises at least one sole (21), a cap (22) extending to the front and both sides, and a fixing device (23) and the fixing portion (30) comprises at least one insole (31), one heel portion (32), two side tabs (33) and a fixing device (34) wherein the heel portion (32) can be attached to the sole (21) with an adjustable spacing and wherein the fixing devices (23, 34) enable a firm hold of the hoofshoe (10) to the hoof.

2. A hoofshoe according to claim 1 **characterized in that** the fixing portion (30) is completely detachable from the protecting portion (20).

3. A hoofshoe according to claim 1 or 2 **characterized in that** on the inner surface of the heel portion (32) a padding (35) for the protection of the ball is attached.

4. A hoofshoe according to any of the claims 1 to 3 **characterized in that** the cap (22) is provided with one or more notches (24) with or without recesses which are arranged to enable the cap (22) to accommodate hoofs of variable steepness.

5. A hoofshoe according to any of the claims 1 to 4 **characterized in that** on the inner surface of the cap (22) there is at least partially formed or attached a structure (25) which is preferably non-slipping with respect to a hoof.

6. A hoofshoe according to any of the claims 1 to 5 **characterized in that** the sole (21) is provided with a profile (40) which preferably is non-slipping.

7. A hoofshoe according to any of the claims 1 to 6 **characterized in that** the sole (21) has a thread (41) for cleats and/or means for metal pins (42).

8. A hoofshoe according to any of the claims 1 to 7 **characterized in that** the sole (21) has metal pins (42).

9. A hoofshoe according to any of the claims 1 to 8 **characterized in that** the insole (31) at its lower surface as well as the sole (21) at its upper surface are provided at least partially with structures which are non-slipping with respect to each other.

10. A hoofshoe according to any of the claims 1 to 9 **characterized in that** the upper surface of the sole (21) has a preferably essentially rectangular recess (29) into which the insole (31) can be inserted with an adjustable length.

11. A hoofshoe according to any of the claims 1 to 10 **characterized in that** the insole (31) can be attached adjustably to the sole (21) by means of screws.

12. A hoofshoe according to any of the claims 1 to 11 **characterized in that** the fixing devices (23, 34) comprise straps (38), buckles (39) and eyes, loops and/or hooks (28).

## Revendications

1. Chaussure de sabot (10) pour ongulés constituée d'au moins une partie de protection (20) et d'une partie de fixation (30) dans laquelle la partie de protection (20) comprend au moins une semelle (21), un bout dur (22) s'étendant à l'avant et aux deux cotés ainsi qu'un dispositif de fixation (23), et la partie de fixation (30) comprend au moins une semelle intérieure (31), un contrefort (32), deux attaches de coté (33) et un dispositif de fixation (34), le contrefort (32) pouvant être attaché à la semelle (21) avec un espacement ajustable et les dispositifs de fixation (23, 34) permettant un appui solide de la chaussure (10) sur le sabot.

2. Chaussure de sabot selon la revendication 1 **caractérisée en ce que** la partie de fixation (30) est complètement détachable de la partie de protection (20).

3. Chaussure de sabot selon la revendication 1 ou 2 **caractérisée en ce que** sur la face intérieure du contrefort (32) est attaché un coussin (35) pour protéger la sole.

4. Chaussure de sabot selon une des revendications 1 à 3 **caractérisée en ce que** le bout dur (22) dispose d'une ou des incisions (24) comportant ou non des évidements arrangés afin que le bout dur (22) puisse s'adapter à des sabots de raideurs différents.

5. Chaussure de sabot selon une des revendications 1 à 4 **caractérisée en ce que** sur la face intérieure du bout dur (22) est établie ou appliqué, au moins partiellement, une structure (25), préférablement antidérapante relative au sabot.

6. Chaussure de sabot selon une des revendications 1 à 5 **caractérisée en ce que** la semelle (21) dispose d'un profil (40), préférablement antidérapant.

7. Chaussure de sabot selon une des revendications 1 à 6 **caractérisée en ce que** la semelle (21) comporte un filet (41) pour crampons et/ou des dispositifs pour pointes métalliques (42).

8. Chaussure de sabot selon une des revendications 1 à 7 **caractérisée en ce que** la semelle (21) comporte des pointes métalliques (42).

9. Chaussure de sabot selon une des revendications 1 à 8 **caractérisée en ce que** la semelle intérieure (31) sur sa face inférieure ainsi que la semelle (21) sur sa face supérieure sont munies, au moins partiellement, de structures antidérapantes l'une relative à l'autre.

10. Chaussure de sabot selon une des revendications 1 à 9 **caractérisée en ce que** la face supérieure de la semelle (21) a un évidement (29), de préférence essentiellement rectangulaire, dans lequel la semelle intérieure (31) peut être insérée avec un longueur ajustable.

11. Chaussure de sabot selon une des revendications 1 à 10 **caractérisée en ce que** la semelle intérieure (31) peut être fixée d'une manière ajustable à la semelle (21) avec des boulons.

12. Chaussure de sabot selon une des revendications 1 à 11 **caractérisée en ce que** les dispositifs des fixation (23, 34) comprennent des lanières (38), des boucles (39) et des oeillets, des noeuds coulants et/ou des agrafes.
